# EUROPÄISCHE PATENTSCHRIFT

(11) **EP 1 397 964 B1**
(45) Veröffentlichungstag und Bekanntmachung des Hinweises auf die Patenterteilung: **07.03.2007**
(21) Anmeldenummer: 03015608.7
(22) Anmeldetag: 15.07.2003
(51) Int. Cl.: A24C 5/39

(54) **Verfahren und Vorrichtung zur Justierung der Ausselektion von Winnowings**
Method and device for adjusting the sorting out of winnowings
Méthode et appareil pour le réglage du triage des déchets grossiers de vanneuse

(30) Priorität: 03.09.2002 DE 10240617
(43) Veröffentlichungstag der Anmeldung: 17.03.2004
(73) Patentinhaber: British American Tobacco (Germany) GmbH, 20354 Hamburg (DE)
(72) Erfinder: Kuhl, Volker, 95448 Bayreuth (DE); Masurat, Heinz-Werner, 95339 Neuenmarkt (DE); Müller, Thomas, 95444 Bayreuth (DE); Rabenstein, Bernd, 95500 Heinersreuth (DE)
(74) Vertreter: Schwabe - Sandmair - Marx

(56) Entgegenhaltungen:
- EP-A- 0 557 941
- DE-C1- 19 948 559
- US-A- 3 232 297
- US-A- 4 651 758
- US-B1- 6 186 334
- US-B1- 6 343 234
- US-B1- 6 371 126

## Beschreibung

Die Erfindung betrifft ein Verfahren und eine Vorrichtung zur Justierung der Ausselektion von Winnowings bei der Herstellung von rauchbaren Artikeln, insbesondere Zigaretten.

Seit langem ist es in der industriellen Zigarettenfertigung gebräuchlich, den geschnittenen Tabak vor der Strangherstellung nochmals zu sichten, um größere, im Tabakstrang einer Zigarette unerwünschte Tabak-Partikel, die im folgenden auch als "Winnowings" bezeichnet werden sollen, auszuscheiden.

Dieser Sichtungsprozess wird bei üblichen Zigaretten in Herstellungsmaschinen immer im Sichter der Strangherstellungsmaschine durchgeführt. Es gibt verschiedene Techniken zur Abscheidung von Winnowings, die vor allem auf den unterschiedlichen Massen der Winnowings einerseits und des in der Zigarette erwünschten Tabakblattmaterials, im weiteren kurz Lamina genannt, andererseits beruhen.

Wesentlich ist bei den gebräuchlichen Verfahren, dass die Tabak-Partikel unter dem Einfluss der Gravitation und/oder einer zusätzlichen Kraft, z.B. durch eine beeinflussende Luftströmung, räumlich in leichte und schwere Teilchen aufgeteilt werden.

Eine bekannte Trenntechnik wird in der DE-PS 11 57 523 beschrieben, bei der von einer Winnover-Walze mechanisch ausgeworfene Tabak-Partikel unterschiedliche Flugbahnen durchlaufen, auf zwei Prallbleche treffen und so separiert werden.

Bei dem Verfahren nach der GB-PS 971 736 werden Tabak-Partikel durch einen Luftstrom geworfen, wodurch die leichteren Partikel mitgerissen werden und die schwereren Partikel nach unten auf ein Sieb fallen. Durch das Sieb kann nochmals eine von unten anströmende Luftströmung die leichteren Partikel von den schwereren trennen.

Die GB-PS 998 476 zeigt ein Verfahren, bei dem die Tabak-Partikel in einem kontinuierlichen Strom durch eine in Querrichtung eingeleitete Luftströmung fallen. Die Tabak-Partikel werden aufgrund ihrer unterschiedlichen Massen unterschiedlich stark abgelenkt und so getrennt.

Bei dem Verfahren nach der DE-PS 11 67 241 werden Tabak-Partikel durch eine Abschlagwalze weggeschleudert und durchlaufen dabei aufgrund ihrer Masse unterschiedliche Flugbahnen. Die schwereren Tabakteilchen, in der Regel Rippen, fallen in einen Rippenkasten. Die leichteren Tabakteilchen fallen durch einen quer- bzw. entgegengerichteten Sichtluftstrom, wobei die noch vorhandenen, schwereren Teilchen von den leichteren Teilchen getrennt werden.

Die US-A 3,092,117 zeigt die pneumatische Förderung von Tabak-Partikeln in einer ersten Luftströmung. Eine zweite Luftströmung lenkt die leichteren Partikel ab und trennt so zwei Fraktionen voneinander.

Die US-A 3,173,861 zeigt Tabak-Partikel, die in einer zur Fallrichtung im wesentlichen senkrechte regulierbare Luftströmung nach unten fallen. Die schwereren Partikel werden nicht bzw. kaum abgelenkt und gelangen so zu einer unteren Sammelöffnung. Dabei ist eine Regulierung in dem Sinne vorgesehen, dass man die Grundeinstellung der Maschine ändern kann, um so das Trennverfahren an unterschiedliche Tabake anzupassen.

Die DE-PS 21 06 134 zeigt ein Verfahren, bei dem Tabak-Partikel an einer Saugwalze vorbeigeführt werden, so das leichtere Partikel an der Saugwalze haften bleiben, während schwerere Partikel nach unten fallen. Zur Grundeinstellung des Abtrennmechanismus sind zwei verschiedene Luftzuführungen vorgesehen.

Schließlich zeigt die DE 42 42 325 A1 ein Verfahren, bei dem Tabak-Partikel in einem Zyklon-Abscheider voneinander getrennt werden.

Untersucht man das abgeschiedene Material, das mit einem der Verfahren nach dem Stand der Technik separiert worden ist, durch Auswiegen und Sieben des über eine gewisse Zeit gesammelten, aussortierten Materials, so ergibt sich, dass in Abhängigkeit von der Einstellung des Abscheide-Prozesses nahezu immer Winnowings und Lamina in unterschiedlichen Mengen vorhanden sind. Bei optimaler Einstellung sollte es jedoch möglich sein, die gesamten Winnowings, jedoch keine Lamina, abzuscheiden.

Detaillierte Untersuchungen des zeitlichen Verlaufs der Abscheidemengen von Winnowings und Lamina durch Verwendung eines geeigneten Sensors haben folgendes ergeben:

Die Gesamtabscheideraten sind häufig instabil, bezogen auf einen Sollwert, so dass in diesen instabilen Phasen zu wenig Winnowings abgeschieden werden und damit die Produktqualität sinkt, wenn nämlich die Abscheidung unter den Sollwert abfällt, oder ein zu großer Anteil der Lamina für die Herstellung verloren geht, wenn die Abscheidung über den Sollwert ansteigt und damit Lamina als Winnowings ausgeschieden werden.

In Phasen einer stabilen Abscheidung in der Gesamtmenge kann nicht auf natürlich schwankende Winnowing-Anteile in dem zugeführten Tabakmaterial reagiert werden, das heißt, die Abscheiderate lässt sich nicht nachregeln.

Die Einstellung der Abscheidung an Strangmaschinen nach dem Stand der Technik ist außerdem nicht für ein schnelles Eingreifen geeignet, da für eine Änderung der Grundeinstellung in der Regel der Herstellungsprozess unterbrochen werden muss, um den Abscheidevorgang, also die Mittel zur Abscheidung der Winnowings aus dem Strom von Tabak-Partikeln zu verändern. So muss bei Verwendung eines Prallbleches als Abscheiderelement bei den derzeit gebräuchlichen Anlagen die Maschine angehalten und die Lage des Prallbleches mittels ihrer Befestigungsschraube verändert werden. Durch diese Unterbrechung ist jedoch die Kontinuität der Herstellung gestört, und eine Kontrolle der veränderten Abscheidung ist in den Minuten nach der Umstellung nicht möglich, da das Ergebnis nicht den Wert einer kontinuierlichen Produktion widerspiegeln kann.

Dies gilt selbst dann, wenn mit dem Sensor nach der DE 199 48 559 C1 eine kontinuierliche Überwachung der Winnowings durchgeführt wird.

US-B1-6,186,334 zeigt ein Verfahren zum Sichten von Schüttgüttern, die in feine und grobe Teilchen aufgeteilt werden sollen. In dem Ausgang für die groben Teilchen befindet sich ein akustischer Sensor mit einer Prallplatte, auf die die feinen Teilchen auftreffen. Dabei erzeugen sie Schallwellen, deren Frequenzen im Wesentlichen von der Größe der Teilchen abhängen und von einem Schallanalysator registriert werden.

Aus diesen Schallwellen wird die Menge der feinen Teilchen ermittelt, die mit einem Wert für eine Soll-Menge verglichen wird. In Abhängigkeit von dem Ergebnis des Vergleichs wird die Trenneinrichtung verstellt, beispielsweise die in den Sichter eingeleitete Gasmenge verstellt.

Der Erfindung liegt die Aufgabe zugrunde, ein Verfahren und eine Vorrichtung vorzuschlagen, die den Abtrennvorgang für die Winowings in einem Strom von Tabak-Partikeln kurzfristig und ohne Unterbrechung des Produktionsprozesses optimal einstellen können.

Diese Aufgabe wird für das Verfahren durch die Merkmale des Anspruchs 1 und für die Vorrichtung durch die Merkmale des Anspruchs 17 gelöst.

Zweckmäßige Ausführungsformen werden durch die Unteransprüche definiert.

Die mit der Erfindung erzielten Vorteile beruhen zunächst auf der Verwendung eines Sensors, der die aktuelle Größenverteilung eines pro Zeiteinheit eine Messstelle passierenden Stroms von Tabak-Partikeln erfasst. Dabei kann es sich um einen Strom von abgetrennten Winnowings oder um einen Strom von nutzbaren Tabak-Partikeln allein handeln. Da jedoch eine vollständige Trennung der Winnowings von den nutzbaren Tabak-Partikeln in der Regel nicht möglich ist, lässt sich auch die Größenverteilung eines Stroms erfassen, der sowohl nutzbare Tabak-Partikel als auch Winnowings enthält.

Diese aktuelle, ermittelte Größenverteilung, die bei einem Strom von nutzbaren Tabak-Partikeln und Winnowings aus zwei, einander teilweise überlappenden Größenverteilungen besteht, wird mit einer entsprechenden, einstellbaren Soll-Größenverteilung verglichen, so dass anhand des Ergebnisses dieses Vergleiches festgestellt werden kann, wie gut die Anordnung zur Abtrennung der Winnowings eingestellt ist.

Bei veränderungswürdigen Einstellungen wird in Abhängigkeit von dem Ergebnis dieses Vergleichs diese Anordnung kontinuierlich verstellt, bis die aktuelle Größenverteilung wieder identisch mit der einstellbaren Soll-Größenverteilung wird.

Ein geeigneter Sensor wird in der DE 199 48 559 C1 beschrieben und weist eine Feinstrahl-Lichtschranke auf, die die Abmessung der Tabak-Partikel in Transportrichtung erfaßt und daraus das Volumen und/oder den Massenstrom der die Messstelle passierenden Tabak-Partikel ermittelt, woraus wiederum die aktuelle Größenverteilung gewonnen werden kann.

Verwendet man in diesem Sensor zwei in Transportrichtung der Tabakpartikel hintereinander angeordnete Feinstrahl-Lichtschranken, so lässt sich neben der Abmessung der Tabak-Partikel in Transportrichtung auch die Transportgeschwindigkeit ermitteln, so dass etwaige Änderungen der Transportgeschwindigkeit bei der Ermittlung der aktuellen Größenverteilung selbsttätig erfasst werden.

Für den Vergleich der aktuellen Größenverteilung und der Soll-Größenverteilung stehen verschiedene Verfahren zur Verfügung. So können beispielsweise die Peaks oder die Gesamtflächen der entsprechenden Kurven miteinander verglichen werden, oder es kann das Verhältnis zwischen den Größenverteilungen für die Winnowings und für die nutzbaren Tabak-Partikel hierzu benutzt werden.

Für die Verstellung der Anordnung zur Abtrennung der Winnowings wird zweckmässigerweise die räumliche Lage der verschiedenen; in Frage kommenden Abscheiderorgane für die Winnowings verstellt.

Nach einer bevorzugten Ausführungsform dient hierbei als Abscheiderorgan ein Prallblech, das durch einen Elektromotor, insbesondere einen Schrittmotor, kontinuierlich verstellt wird.

Dabei kann der Elektromotor direkt an dem Prallblech angebracht sein, oder aber der Elektromotor kann über Bowdenzug-Verbindungen mit dem Prallblech gekoppelt sein, das wiederum über Federn in eine Lage vorgespannt wird. Der Elektromotor verstellt das Prallblech über die Bowdenzug-Verbindungen gegen die Vorspannkraft der Federn, wodurch eine definierte Soll-Lage vorgegeben wird.

Als Alternative hierzu kann man auch in die pneumatische Abtrennung der Winnowings von den nutzbaren Tabakpartikeln eingreifen, indem man beispielsweise die Strömungsmenge und/oder den Druck der entsprechenden Luftströmung variiert.

Schließlich ist es auch möglich, die Geschwindigkeit des Fördermediums für den Strom von Tabak-Partikeln an das Ergebnis des Vergleiches anzupassen, wobei als Fördermedium für den Strom von Tabak-Partikeln Walzen, Bänder oder Luftströmungen zur Verfügung stehen. Die Änderung der Geschwindigkeit der Walzen und Bänder erfolgt mechanisch durch Beaufschlagung des entsprechenden Antriebsmotors, während bei Verwendung von Luft als Fördermedium die Geschwindigkeit der Luftströmung durch Änderung der Strömungsmenge und/oder des Drucks angepasst wird.

Selbstverständlich hängt die Art des Eingriffs in den Abtrennprozess von der verwendeten Zigaretten-Herstellungsmaschine und der Abscheidetechnologie ab.

In jedem Falle ergibt sich ein sehr einfacher Regelmechanismus, der nur in den Abscheideprozess der Zigaretten-Herstellungsmaschine automatisch und ohne sonstige Beeinflussung der Maschine eingreift; insbesondere ist es nicht mehr erforderlich, die Maschine abzustellen und manuell die Grundeinstellung des Abscheideprozesses zu ändern.

Der Soll-Wert für die Größenverteilung kann aufgrund von gemachten Erfahrungen vorgegeben werden. Als Alternative hierzu ist jedoch durch den beschriebenen Regelkreis auch eine Art automatische Kalibrierung möglich, indem der optimale Soll-Wert durch das Regelverfahren selbst ermittelt wird.

Zu diesem Zweck wird beispielsweise die Abtrennung variiert, also z.B. das als Abscheideorgan dienende Prallblech in beiden Richtungen bewegt und dabei die Veränderung des Verhältnisses Größenverteilung (Massenstrom) Winnowings : Größenverteilung (Massenstrom) nutzbare Tabakteilchen über eine gewisse Zeit beobachtet. Da die Absicht darin liegt, beispielsweise bei der Erfassung eines Stroms von Winnowings darauf hinzuarbeiten, dass keine nutzbaren Tabakpartikel, also unterhalb einer gewissen Masse liegende Tabak-Partikel, mehr vorhanden sind, kann das System selbsttätig das Abscheideorgan in Richtung auf einen Soll-Wert verstellen, der diesem Optimum noch näher kommt.

Die Erfindung wird im Folgenden anhand von Ausführungsbeispielen unter Bezugnahme auf die beiliegenden, schematischen Zeichnungen näher erläutert. Es zeigen
Fig. 1 eine schematische Darstellung eines Sensors für einen Winnowings-Strom;
Fig. 2 eine Darstellung des Grundaufbaus des Regelkreises;
Fig. 3 eine Darstellung des Materialflusses und des Datenflusses;
Fig. 4 eine Darstellung eines besonders bevorzugten Abscheideorgans, nämlich eines Prallbleches.

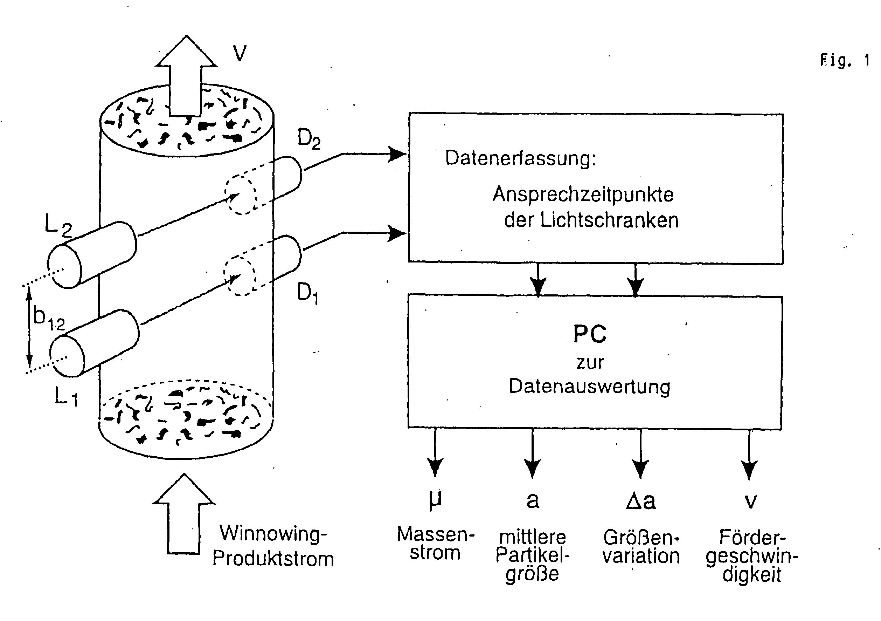

Der in Figur 1 dargestellte Sensor zur Erfassung der aktuellen Größenverteilung des Stroms von Tabak-Partikeln ist der DE 199 48 559 C1 entnommen.

Wie bereits oben erwähnt wurde, erfolgt bei der Zigaretten-Herstellung in der Zigarettenmaschine eine Sichtung des ankommenden Tabakstroms. Nur hinreichend feines Tabakmaterial wird in den Tabakstrang eingebaut, während der verbleibende Anteil an gröberem Material die Winnowings darstellt, die an einem Ausgang der Zigarettenmaschine ausgegeben und per Luftförderung für die weitere Verarbeitung zentral gesammelt werden.

Auf diesem Weg werden die Winnowings durch das in Figur 1 dargestellte Förderrohr transportiert, das gleichzeitig auch als Sensor-Rohr dient. Dieses Sensor-Rohr kann sich an einer geeigneten Stelle in der Zigarettenmaschine an der Förderstrecke der Winnowings befinden, wo ausreichend Platz zur Verfügung steht.

An diesem Sensor-Rohr sind zwei Feinstrahl-Lichtschranken angeordnet, die auf einer Seite des Sensor-Rohrs eine Lichtquelle L₁, L₂ und auf der gegenüberliegenden Seite des Sensor-Rohrs einen Detektor D₁, D₂ aufweisen. Der Messstrahl verläuft zentrisch durch den Rohrquerschnitt. Die Geschwindigkeit des Winnowing-Produktstroms ist durch den Buchstaben V angedeutet, und die Transportrichtung durch die beiden Pfeile.

Wenn entsprechend den üblichen Gegebenheiten die über Längs- und Querdimension gemittelten Winnowings-Partikelabmessungen 2 mm betragen und die Messlichtstrahlen der beiden Feinstrahl-Lichtstrahlen einen Durchmesser von 0,1 mm haben, so lässt sich aus der Ansprechzeit jeder Lichtschranke, also ihrer Verdunkelungszeit, die Abmessung der vorbeifliegenden Tabak-Partikel in Förderrichtung ermitteln. Aus dieser Abmessung kann über einen Kalibriervorgang, der die Dichte und den Mittelwert der Partikel-Größen berücksichtigt, ein Wert für die mittlere Partikelgröße, den Massenstrom, sowie die Größenvariation ermittelt werden.

Die beiden Lichtschranken sind in einem kurzen Abstand hintereinander in dem Sensor-Rohr angebracht, so dass aus der zeitlichen Differenz zwischen den Ansprechsignalen der beiden Lichtstrahlen die Partikel-Geschwindigkeit V direkt im Sensor selbst bestimmt und angegeben werden kann. Damit wird der Partikel-Sensor autark, also unabhängig von anderen Messgeräten.

Aus den gewonnenen, in Figur 1 angegebenen Daten kann also die Größenverteilung des Winnowing-Stroms ermittelt werden, der in der Regel zwei Peaks hat, nämlich einmal für die Winnowings und zum anderen für die nutzbaren Tabak-Partikel, die trotz der vorgenommenen Abtrennung noch in dem Winnowings-Produktstrom enthalten sind.

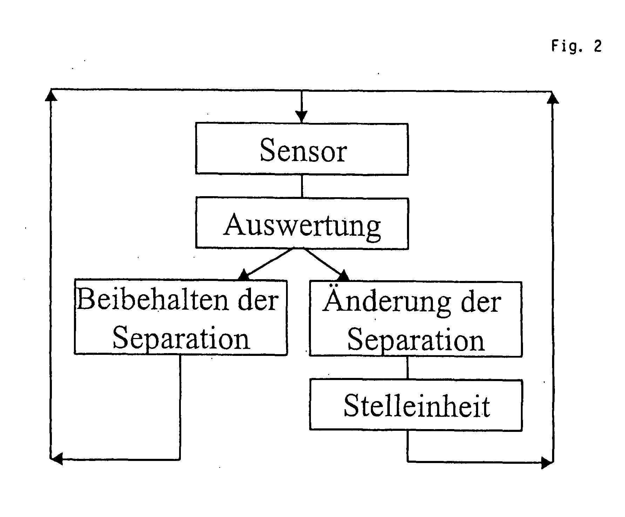

Diese bzw. diese beiden, aktuell von dem Sensor ermittelte(n) Größenverteilung(en) wird/werden dem in Figur 2 dargestellten Regelkreis zugeführt, der sie auf noch zu erläuternde Weise auswertet und mit einer einstellbaren Soll-Größenverteilung vergleicht. In Abhängigkeit von dem Ergebnis dieses Vergleiches wird entweder in den Abtrennvorgang eingegriffen, also die Separation verändert, oder die Separation unverändert belassen. Bei einer Änderung der Separation wird der Stelleinheit des Abscheideorgans ein entsprechendes Signal zugeführt, um deren Einstellung zu ändern, womit wiederum der Abtrennvorgang beeinflusst wird.

Die in Figur 2 angedeutete "Auswertung" beinhaltet auch die Eingabe eines Soll-Wertes für die bzw. jede Größenverteilung, der entweder manuell oder aber selbsttätig verändert werden kann.

Für die Selbst-Justierung dieses Regelprozesses werden die beiden Größenverteilungen für die nutzbaren Tabak-Partikel einerseits, die trotz der Anwendung noch in dem Winnowings-Produktstrom enthalten sind, und den Winnowing-Produktstrom andererseits miteinander verglichen und ein Stellsignal ausgegeben, das die Stelleinheit in Richtung einer Verringerung des Anteils an nutzbaren Tabak-Partikeln, also in Richtung einer Verkleinerung dieser Größenverteilung, verstellt.

Es wird dann erneut gemessen, und eine weitere Verstellung durchgeführt, bis schließlich ein Soll-Wert erreicht wird, der der optimalen, mit den vorliegenden Gegebenheiten möglichen Abtrennung entspricht.

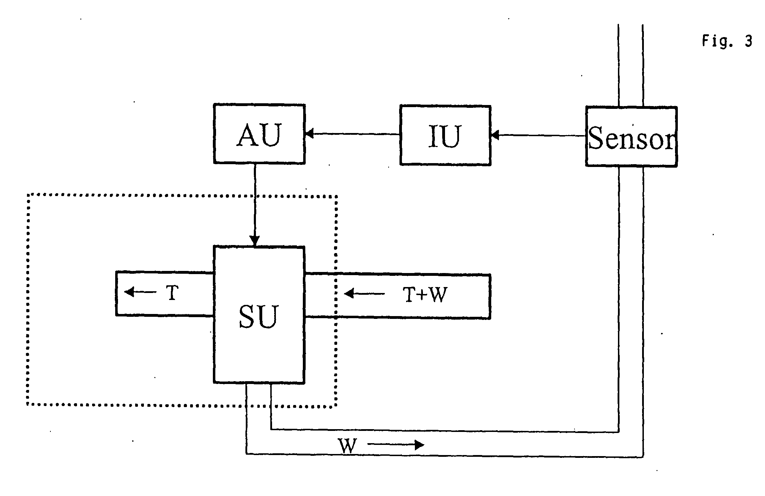

Figur 3 zeigt den Material- und Datenfluss einer Zigarettenmaschine, die sich in dem punktierten Rechteck befindet. Dieser Zigarettenmaschine wird ein Strom aus nutzbaren Tabak-Partikeln und Winnowings T+W zugeführt, der in der einstellbaren Separationseinheit SU (für Separation Unit) in einen Strom T von nutzbaren Tabak-Partikeln und einen Strom W von Winnowings aufgetrennt wird.

Diese Abtrennung sollte bevorzugt so sein, dass der Strom W nur Winnowings und der Strom T nur nutzbare Tabak-Partikel enthält. In der Praxis ist das jedoch in der Regel nicht möglich.

Die Separationseinheit (SU) hat den aus dem Stand der Technik bekannten Aufbau und wird in Abhängigkeit vom verwendeten Typ der Zigarettenmaschine auf einen sinnvollen Wert für die Abtrennung der Winnowings eingestellt.

Der Strom T von nutzbaren Tabak-Partikeln wird zur Strangherstellung (nicht dargestellt) transportiert, während der Strom W von Winnowings aus der Zigarettenmaschine abgefördert und beispielsweise einer Sammelstelle zugeführt wird, wo eine Aufbereitung, möglicherweise mit einem weiteren Schneidvorgang, erfolgen kann. Dieser wiedergewonnene Anteil kann dann erneut der Zigarettenherstellung zugeführt werden.

Bei dem aus Figur 3 ersichtlichen Sensor handelt es sich um die Feinstrahl-Lichtschranke nach dem deutschen Patent DE 199 48 559 C3 mit zwei Lichtstrahlen (siehe Figur 1), die auf der Strecke für den pneumatischen Transport der Winnowings, in der Regel mit einem kleinen Anteil an nutzbaren Tabak-Partikeln, angeordnet ist, um die Größenverteilung der abgetrennten Winnowings und möglicherweise auch der noch vorhandenen nutzbaren Tabak-Partikel zu erfassen.

Die Messdaten, also die aktuelle Größenverteilung oder auch (siehe Figur 1) die Massenstromverteilung werden auf eine Auswerteeinheit IU (für Interpretation Unit) gegeben, in der auch der beschriebene Vergleich Soll-Wert/Ist-Wert stattfindet.

Ist eine Änderung der Einstellung der Abtrennung erforderlich, gibt die Auswerteeinheit IU eine entsprechende Aufforderung an die Stelleinheit AU (für Adjusting Unit) weiter, die, in Abhängigkeit von dem verwendeten Abtrennmechanismus und damit der eingesetzten Maschine, die Stellmittel verstellt, mit denen normalerweise auch die Grundeinstellung für die Abtrennung erfolgt.

Wie oben erläutert wurde, stehen verschiedene, aus dem Stand der Technik bekannte Maßnahmen zur Abtrennung der Winnowings aus dem Strom von nutzbaren Tabak-Partikeln zur Verfügung, zu denen insbesondere pneumatische Maßnahmen zur Auftrennung des Strom von Tabak-Partikeln in die zwei Fraktionen gehören. Hierbei kann durch Beeinflussung der Luftströmung, beispielsweise der Luftmenge, des Luftdrucks und/oder der Luftgeschwindigkeit, die Auftrennung beeinflusst werden.

Dabei kann beispielsweise die Strömungsmenge auf besonders einfache Weise durch Änderung des Strömungsquerschnittes variiert werden, so das sich ein sehr einfacher Verstellmechanismus ergibt.

Weiterhin ist es auch möglich, die Geschwindigkeit des Fördermediums für den Strom von Tabak-Partikeln an das Ergebnis der Auswertung anzupassen, also beispielsweise Walzen, Bänder oder auch Luftströmungen, die für den pneumatischen Transport von Tabak-Partikeln eingesetzt werden. Hier kann wiederum ebenfalls die Luftmenge, der Luftdruck und/oder die Luftgeschwindigkeit beeinflusst werden, wodurch sich bei Änderung des Strömungsquerschnittes ebenfalls ein sehr einfacher Verstellmechanismus ergibt.

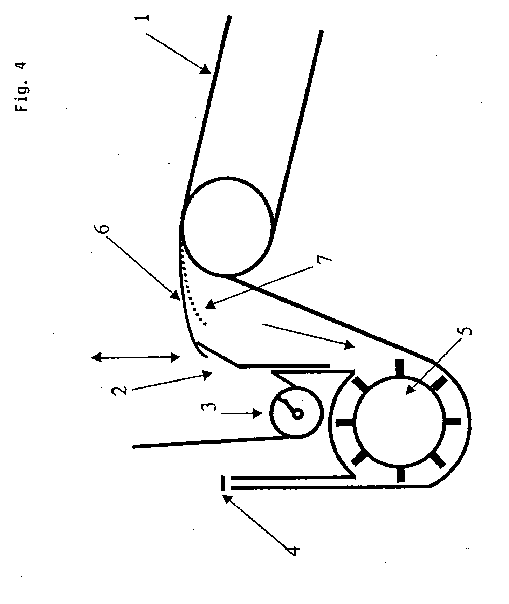

Diese beiden, im Prinzip möglichen Abtrennungsmechanismen sind in den Zeichnungen nicht dargestellt, da nach einer bevorzugten Ausführungsform als Abscheideorgan ein Prallblech verwendet wird, wie es sehr häufig für die Abscheidung von Winnowings eingesetzt wird. Eine entsprechende Ausführungsform ist aus Figur 4 ersichtlich.

Durch ein Förderband 1 wird Schnitttabak in den Ausbreiter einer Zigaretten-Strangmaschine gefördert, der an dem gemäß der Darstellung in Figur 4 linken Ende des Förderbandes eine ballistische Kurve beschreibt, die durch die Endgeschwindigkeit des Förderbandes an der Stelle, an der die Tabak-Partikel freigegeben werden, beeinflusst wird.

Auf die Tabak-Partikel wirken nach Verlassen des Förderbandes 1 zwei wesentliche Kräfte: aufgrund ihrer kinetischen Energie bewegen sich die Tabak-Teilchen weiter in Richtung des Förderbandes, und gleichzeitig werden sie durch die Schwerkraft nach untern beschleunigt, so dass sich insgesamt eine Bewegungskurve der nun freien Tabak-Partikel nach Art einer Wurfparabel ergibt.

Die Form dieser Wurfparabel wird noch zusätzlich durch eine Kraft beeinflusst, die von einem Saugband 4 ausgeübt wird, an dem ein Unterdruck anliegt, so dass von den das Förderband 1 verlassenden Tabak-Partikel durch die Förderluftströmung, die sich aufgrund des Unterdrucks in Richtung des Pfeils zum Saugband 4 bewegt, die leichteren Tabak-Partikel stärker nach unten abgelenkt werden als die schwereren. Dadurch prallen die leichteren Tabak-Partikel gegen ein Prallblech 2, fallen nach unten und werden durch den Unterdruck, unterstützt durch eine Förderwalze 5, zum Saugband 4 befördert. Die Bahn dieser leichteren nutzbaren Tabak-Partikel ist durch die gepunktete Wurfparabel 7 angedeutet.

Die schwereren Winnowings überwinden durch ihre höhere kinetische Energie die Oberkante des Prallblechs 2 und fallen in eine Förderschnecke 3, wie durch die entsprechende, durchgezogene Wurfparabel 6 angedeutet wird; von der Förderschnecke 3 werden sie abtransportiert und auf pneumatischem Wege aus der Maschine entsorgt.

In diesem pneumatischen Abtransport-Pfad sitzen an einer geeigneten Stelle, und zwar möglichst nahe bei dem Ausbreiter bzw. der Zigarettenstrangmaschine, der aus Figur 1 ersichtliche Sensor, der die Größenverteilung der Tabak-Partikel, in diesem Fall also der Winnowings, erfasst.

Durch Verstellen der Höhe des Prallbleches 2, angedeutet durch den Doppelpfeil über der Wurfparabel 6, kann in den eigentlichen Abtrennvorgang eingegriffen und damit über die erläuterte Regelung festgelegt werden, welche Partikel-Größen als Winnowings entsorgt werden und welche Partikel-Größen in den Tabakstrang für die Herstellung der Zigarette gelangen.

Im Idealfall erhält der Strom von Winnowings nur Winnowings; dies ist jedoch selbst bei optimaler Einstellung des Abtrennvorgangs nur selten möglich, so dass der Sensor in aller Regel nicht nur die einzige Größenverteilung für die Winnowings, sondern eine Doppel-Verteilung für die Größenverteilung der Winnowings und für die Größenverteilung der noch vorhandenen nutzbaren Tabak-Partikel misst.

Wie erwähnt, kann durch einen Vergleich zwischen der bzw. jeder aktuellen Größenverteilung, wie sie von dem Sensor erfasst wird, und dem eingegebenen Soll-Wert bzw. den Soll-Werten für die Größenverteilung(en) eine Abweichung vom gewünschten Wert festgestellt und dementsprechend in den Abtrennvorgang eingegriffen werden.

Hierzu können die beiden Größenverteilungen direkt miteinander verglichen oder aber nur ihre Peak-Höhen zueinander in Korrelation gesetzt werden.

Auch ein Vergleich des Verhältnisses der beiden aktuellen Größenverteilungen mit einem entsprechenden Soll-Wert ist möglich, der, wie oben erläutert wurde, auch selbsttätig eingestellt werden kann.

Die durch den Doppelpfeil angedeutete Verstellung des Prallblechs 2 kann durch einen Schrittmotor erfolgen, der direkt an dem Prallblech 2 befestigt ist und durch die Stelleinheit AU in Abhängigkeit von dem Ausgangssignal des Sensors (siehe Figur 3) betätigt wird.

Als Alternative hierzu ist es auch möglich, einen Verstellmotor, insbesondere einen Schrittmotor, über Bowdenzugverbindungen (nicht dargestellt) mit dem Prallblech 2 zu verbinden, welches gemäß der Darstellung in Figur 4 über Federn zu einer Verstellung nach unten vorgespannt wird. Der Schrittmotor zieht also das Prallblech 2 unter Überwindung der Vorspannkraft der Federn nach oben, so dass das obere Ende des Prallblechs 2 in den durch die beiden Wurfparabeln 6, 7 gebildeten Transportweg der Tabak-Partikel gelangt und dadurch eine Abtrennung der Winnowings vornimmt.

## Patentansprüche

1. Verfahren zur Justierung der Ausselektion von Winnowings bei der Herstellung von rauchbaren Artikeln, insbesondere Zigaretten, bei dem
a) die Abmessungen der Tabak-Partikel in Transportrichtung an einer Messstelle mittels einer Feinlichtschranke erfasst werden,
b) aus den erfassten Abmessungen der Tabak-Partikel die aktuelle Größenverteilung des pro Zeiteinheit die Messstelle passierenden Stroms von Tabak-Partikel ermittelt und
c) mit einer einstellbaren Soll-Größenverteilung verglichen werden, und bei dem
d) in Abhängigkeit von dem Ergebnis des Vergleichs eine Anordnung zur Abtrennung der Winnowings aus dem Strom von Tabak-Partikeln kontinuierlich eingestellt wird.

2. Verfahren nach Anspruch 1, **dadurch gekennzeichnet, dass** die aktuelle Größenverteilung eines Stroms von abgetrennten Winnowings, eines Stroms von nutzbaren Tabak-Partikel und Winnowings oder eines Stroms von nutzbaren Tabak-Partikel allein erfasst und mit einer entsprechenden, einstellbaren Soll-Größenverteilung verglichen wird.

3. Verfahren nach einem der Ansprüche 1 oder 2, dass aus der Erfassung der Abmessung der Tabak-Partikel in Transportrichtung das Volumen und/oder der Massenstrom der die Messstelle passierenden Tabak-Partikel ermittelt wird.

4. Verfahren nach einem der Ansprüche 1 bis 3, **dadurch gekennzeichnet, dass** der Vergleich zwischen der aktuellen Größenverteilung und der Soll-Größenverteilung anhand des Peaks oder der Gesamtfläche der entsprechenden Kurve erfolgt.

5. Verfahren nach einem der Ansprüche 1 bis 4, **dadurch gekennzeichnet, dass** der Vergleich zwischen der aktuellen Größenverteilung und der Soll-Größenverteilung anhand des Verhältnisses zwischen den Größenverteilungen für die Winnowings und für die nutzbaren Tabak-Partikel erfolgt.

6. Verfahren nach einem der Ansprüche 1 bis 5, **dadurch gekennzeichnet, dass** in Abhängigkeit von dem Ergebnis des Vergleichs die räumliche Lage von Abscheideorganen für die Winnowings eingestellt wird.

7. Verfahren nach Anspruch 6, **dadurch gekennzeichnet, dass** ein als Abscheideorgan dienendes Prallblech durch einen Elektromotor, insbesondere einem Schrittmotor, kontinuierlich verstellt wird.

8. Verfahren nach Anspruch 7, **dadurch gekennzeichnet, dass** der Elektromotor direkt an dem Prallblech angebracht ist.

9. Verfahren nach Anspruch 7, **dadurch gekennzeichnet, dass** der Elektromotor über Bowdenzug-Verbindungen mit dem Prallblech gekoppelt ist, das über Federn in eine Lage vorgespannt ist.

10. Verfahren nach Anspruch 6, **dadurch gekennzeichnet, dass** in Abhängigkeit von dem Ergebnis des Vergleiches die Luftströmung, die zur Auftrennung eines Ausgangsstroms von Tabak-Partikeln in die nutzbaren Partikel und die Winnowings dient, angepasst wird.

11. Verfahren nach Anspruch 10, **dadurch gekennzeichnet, dass** die Strömungsmenge und/oder der Druck der Luftströmung angepasst wird.

12. Verfahren nach Anspruch 6, **dadurch gekennzeichnet, dass** in Abhängigkeit von dem Ergebnis des Vergleichs die Geschwindigkeit des Fördermediums für den Strom von Tabak-Partikeln angepasst wird.

13. Verfahren nach Anspruch 12, **dadurch gekennzeichnet, dass** als Fördermedium für den Strom von Tabak-Partikeln Walzen, Bänder oder Luftströmungen verwendet werden.

14. Verfahren nach Anspruch 13, **dadurch gekennzeichnet, dass** die Geschwindigkeit der als Fördermedium dienenden Luftströmung durch Änderung der Strömungsmenge und/oder des Drucks angepasst wird.

15. Verfahren nach einem der Ansprüche 1 bis 14, **dadurch gekennzeichnet, dass** die Soll-Größenverteilung durch Erfassung der Veränderung des Verhältnisses Größenverteilung Winnowings : Größenverteilung Tabak-Partikel und Optimierung dieses Verhältnisses durch Verstellung der Anordnung zur Abtrennung der Winnowings ermittelt wird.

16. Vorrichtung zur Justierung der Ausselektion von Winnowings bei der Herstellung von rauchbaren Artikeln, insbesondere Zigaretten,
a) mit einer Feinstrahl-Lichtschranke für die Erfassung der Abmessungen der Tabak-Partikel in Transportrichtung an einer Messtelle,
b) mit einem Rechner zur Ermittlung der aktuellen Größenverteilung des pro Zeiteinheit die Feinstrahl-Lichtschranke passierenden Stroms von Tabak-Partikeln,
c) mit einer Anordnung zur Eingabe einer Soll-Größenverteilung des Stroms von Tabak-Partikeln,
d) mit einer Anordnung für den Vergleich der aktuellen Größenverteilung mit der einstellbaren Soll-Größenverteilung, und
e) mit einer Stellanordnung für die Einstellung einer Anordnung zur Abtrennung der Winnowings aus dem Strom von Tabak-Partikeln in Abhängigkeit von dem Ausgangssignal der Vergleichsanordnung.

17. Vorrichtung nach Anspruch 16, **dadurch gekennzeichnet, dass** die Feinstrahl-Lichtschranke zwei feinen Lichtstrahlen für die Erfassung der Abmessung der Tabak-Partikeln in Transportrichtung aufweist, und dass ein Schrittmotor als Stellanordnung für ein Prallblech (2) zur Auftrennung des Stroms von Tabak-Partikel in Winnowings und nutzbare Tabak-Partikel, in Abhängigkeit von der Vergleichanordnung vorgesehen ist.

## Claims

1. A method for adjusting the selecting out of winnowings in the manufacture of smokable products, in particular cigarettes, wherein:
a) the dimensions of the tobacco particles are detected in the transport direction at a measuring point by means of a fine-beam light barrier;
b) the current size distribution of the stream of tobacco particles passing the measuring point per unit of time is determined from the detected dimensions and
c) compared with a settable nominal size distribution; wherein
d) an arrangement for separating the winnowings from the stream of tobacco particles is continually adjusted, depending on the result of the comparison.

2. The method according to claim 1, **characterised in that** the current size distribution of a stream of separated winnowings, of a stream of usable tobacco particles and winnowings or of a stream of usable tobacco particles alone is detected and compared with a corresponding, settable nominal size distribution.

3. The method according to claim 1 or 2, **characterised in that** the volume and/or the mass flow rate of the tobacco particles passing the measuring point is determined by detecting the dimensions of the tobacco particles in the transport direction.

4. The method according to any one of claims 1 to 3, **characterised in that** the current size distribution and the nominal size distribution are compared on the basis of their peaks or the overall area of the corresponding curve.

5. The method according to any one of claims 1 to 4, **characterised in that** the current size distribution and the nominal size distribution are compared on the basis of the ratio between the size distributions for the winnowings and for the usable tobacco particles.

6. The method according to any one of claims 1 to 5, **characterised in that** the spatial position of separating units for the winnowings is set, depending on the result of the comparison.

7. The method according to claim 6, **characterised in that** an impact metal sheet serving as a separating unit is continually adjusted using an electric motor, in particular a servo or step motor.

8. The method according to claim 7, **characterised in that** the electric motor is directly attached to the impact metal sheet.

9. The method according to claim 7, **characterised in that** the electric motor is coupled to the impact metal sheet via Bowden wire connections, the impact metal sheet being biased into a position via springs.

10. The method according to claim 6, **characterised in that** the stream of air serving to separate an initial stream of tobacco particles into the usable particles and winnowings is adjusted, depending on the result of the comparison.

11. The method according to claim 10, **characterised in that** the stream quantity and/or the pressure of the stream of air is adjusted.

12. The method according to claim 6, **characterised in that** the velocity of the conveying medium for the stream of tobacco particles is adjusted, depending on the result of the comparison.

13. The method according to claim 12, **characterised in that** cylinders, belts or streams of air are used as the conveying medium for the stream of tobacco particles.

14. The method according to claim 13, **characterised in that** the velocity of the stream of air serving as the conveying medium is adjusted by changing the stream quantity and/or the pressure.

15. The method according to any one of claims 1 to 14, **characterised in that** the nominal size distribution is determined by detecting the change in the ratio of the size distribution of the winnowings to the size distribution of the tobacco particles and optimising this ratio by adjusting the arrangement for separating the winnowings.

16. A device for adjusting the selecting out of winnowings in the manufacture of smokable products, in particular cigarettes, comprising:
a) a fine-beam light barrier for detecting the dimensions of the tobacco particles in the transport direction at a measuring point;
b) a computer for determining the current size distribution of the stream of tobacco particles passing the fine-beam light barrier per unit of time;
c) an arrangement for inputting a nominal size distribution of the stream of tobacco particles;
d) an arrangement for comparing the current size distribution with the settable nominal size distribution; and
e) an adjusting arrangement for setting an arrangement for separating the winnowings from the stream of tobacco particles, depending on the output signal of the comparing arrangement.

17. The device according to claim 16, **characterised in that** the fine-beam light barrier comprises two fine light beams for detecting the dimensions of the tobacco particles in the transport direction, and **in that** a servo or step motor is provided as an adjusting arrangement for an impact metal sheet (2) for separating the stream of tobacco particles into winnowings and usable tobacco particles, depending on the comparing arrangement.

## Revendications

1. Procédé destiné à régler l'élimination des éléments ligneux du tabac haché lors de la fabrication d'articles à fumer, en particulier des cigarettes, dans lequel
a) les dimensions des particules de tabac sont enregistrées dans la direction de transport en un point de mesure au moyen d'une barrière optique à mince faisceau lumineux,
b) la granulométrie actuelle du flux de particules de tabac franchissant par unité de temps le point de mesure est déterminée à partir des dimensions enregistrées des particules de tabac, et
c) est comparée à une granulométrie de consigne réglable, et dans lequel
d) en fonction du résultat de la comparaison, un système de séparation des éléments ligneux hors du flux de particules de tabac est réglé en continu.

2. Procédé selon la revendication 1, **caractérisé en ce que** la granulométrie actuelle d'un flux d'éléments ligneux séparés, d'un flux de particules de tabac utilisables et d'éléments ligneux ou d'un flux de particules de tabac utilisables est enregistrée isolément et est comparée à une granulométrie de consigne correspondante réglable.

3. Procédé selon la revendication 1 ou 2, **caractérisé en ce que**, à partir de l'enregistrement des dimensions des particules de tabac dans la direction de transport, est déterminé le volume et/ou le débit massique des particules de tabac franchissant le point de mesure.

4. Procédé selon l'une quelconque des revendications 1 à 3, **caractérisé en ce que** la comparaison entre la granulométrie actuelle et la granulométrie de consigne est effectuée à l'appui des pics ou de la surface totale de la courbe correspondante.

5. Procédé selon l'une quelconque des revendications 1 à 4, **caractérisé en ce que** la comparaison entre la granulométrie actuelle et la granulométrie de consigne est effectuée à l'appui du rapport entre les granulométries pour les éléments ligneux du tabac haché et pour les particules de tabac utilisables.

6. Procédé selon l'une quelconque des revendications 1 à 5, **caractérisé en ce que** la position dans l'espace des organes de séparation pour les éléments ligneux du tabac haché est réglée en fonction du résultat de la comparaison.

7. Procédé selon la revendication 6, **caractérisé en ce qu'**une chicane, utilisée comme organe de séparation, est réglée en continu par un moteur électrique, en particulier un moteur pas à pas.

8. Procédé selon la revendication 7, **caractérisé en ce que** le moteur électrique est monté directement sur la chicane.

9. Procédé selon la revendication 7, **caractérisé en ce que** le moteur électrique est couplé, par des câbles de liaison sous gaine, à la chicane, qui est précontrainte dans une position par l'intermédiaire de ressorts.

10. Procédé selon la revendication 6, **caractérisé en ce que** le flux d'air, qui est utilisé pour séparer un flux initial de particules de tabac en particules de tabac utilisables et en éléments ligneux, est adapté en fonction du résultat de la comparaison.

11. Procédé selon la revendication 10, **caractérisé en ce que** la quantité de flux et/ou la pression du flux d'air sont adaptées.

12. Procédé selon la revendication 6, **caractérisé en ce que** la vitesse du moyen de transport pour le flux de particules de tabac est adaptée en fonction du résultat de la comparaison.

13. Procédé selon la revendication 12, **caractérisé en ce que** des cylindres, des bandes ou des flux d'air sont utilisés comme moyen de transport pour le flux de particules de tabac.

14. Procédé selon la revendication 13, **caractérisé en ce que** la vitesse du flux d'air utilisé comme moyen de transport est adaptée par la variation de la quantité de flux et/ou de la pression.

15. Procédé selon l'une quelconque des revendications 1 à 14, **caractérisé en ce que** la granulométrie de consigne est déterminée par l'enregistrement de la variation du rapport entre la granulométrie des éléments ligneux et la granulométrie des particules de tabac et l'optimisation de ce rapport est déterminée par le déplacement du système de séparation des éléments ligneux du tabac haché.

16. Dispositif destiné à régler l'élimination des éléments ligneux du tabac haché lors de la fabrication d'articles à fumer, en particulier des cigarettes,
a) comportant une barrière optique à mince faisceau lumineux pour enregistrer les dimensions des particules de tabac dans la direction de transport au niveau d'un point de mesure,
b) comportant un ordinateur destiné à déterminer la granulométrie actuelle du flux de particules de tabac franchissant par unité de temps le point de mesure,
c) comportant un système pour entrer une granulométrie de consigne du flux de particules de tabac,
d) comportant un système pour la comparaison de la granulométrie actuelle avec la granulométrie de consigne réglable,
e) comportant un système de réglage pour régler un système de séparation des éléments ligneux hors du flux de particules de tabac en fonction du signal de sortie du système de comparaison.

17. Dispositif selon la revendication 16, **caractérisé en ce que** la barrière optique comporte deux minces faisceaux lumineux pour enregistrer les dimensions des particules de tabac dans la direction de transport, et **en ce qu'**un moteur pas à pas est prévu comme système de réglage pour une chicane (2) destinée à séparer le flux de particules de tabac en éléments ligneux et en particules de tabac utilisables en fonction du dispositif de comparaison.
